# EUROPEAN PATENT APPLICATION

(11) **EP 4 763 520 A1**
(43) Date of publication of application: **24.06.2026**
(21) Application number: 24854125.2
(22) Date of filing: 30.07.2024
(51) Int. Cl.: B41J 2/01

(54) **PRINTER AND PRINTING METHOD**

(30) Priority: 17.08.2023 JP 2023132780
(71) Applicant: Roland DG Corporation, Shizuoka 431-2103 (JP)
(72) Inventor: IWASE Fumiyoshi, Hamamatsu-shi, Shizuoka 431-2103 (JP)
(74) Representative: Grünecker Patent- und Rechtsanwälte PartG mbB
(86) International application number: PCT/JP2024/027158
(87) International publication number: WO 2025/037534

(57) **Abstract**

A printer 10 includes an ejection head 100 in which a plurality of ejection rows 102 each including a plurality of ejection ports 101 are arranged to align in a Y direction and a controller 20. The controller 20 includes an acquirer 23 that acquires the image data DT1 that is used for forward path printing and includes a plurality of pieces of row image data DT2 prepared for each ejection row 102, a data converter 25 adds empty data DT10 such that inks ejected from the plurality of ejection rows 102 are superimposed in return printing and creates converted image data DT3 including converted row image data DT4 obtained by inverting the row image data DT2, a forward path printing controller 31 that executes forward path printing by causing the plurality of ejection rows 102 to sequentially eject inks from the ejection row 102 at the other side in the Y direction among the ejection rows 102, based on the image data DT1, and a return path printing controller 32 that executes return path printing by causing the plurality of ejection rows 102 to sequentially eject inks from the ejection row 102 at one side in the Y direction among the ejection rows 102, based on the converted image data DT3.

## Description

### Technical Field

The present invention relates to a printer and a printing method.

### Background Art

For example, Patent Document 1 discloses a three-dimensional forming apparatus including an ejection head that ejects a binder to a powder layer formed of a powder material, based on image data. In the three-dimensional forming apparatus, the powder layer is configured to be movable in an X-axis direction relative to the ejection head. The three-dimensional forming apparatus further includes a rail that extends in a Y-axis direction. The ejection head is engaged with the rail and is configured to be movable along the rail in the Y-axis direction.

### Citation List

### Patent Literature

Patent Literature 1: Japanese Laid-open Patent Publication No. 2017-119363

### Summary of Invention

### Technical Problem

For example, in the ejection head described above, there is a probability that the binder is ejected based on the image data on both a forward path heading from one side to the other in the Y-axis direction and a return path heading from the other side to the one side in the Y-axis direction. In this case, when the binder is to be ejected using the image data that is used when the ejection head is moving on the forward path while the ejection head is moving on the return path, there can be a case where the binder cannot be ejected to a desired position.

In view of the foregoing, the present invention has been devised, and it is therefore an object of the present invention to provide a printer and printing method that enables performing printing by ejecting an ink to a proper position when an ejection head is moving on a forward path and a return path in a Y direction.

### Solution to Problem

A printer disclosed herein includes a table that supports a printing material, an ejection head including a plurality of ejection rows each of which is an ejection row in which ejection ports through which inks are ejected are arranged to align in a first direction and that are arranged to align in a second direction that intersects the first direction, a head moving mechanism that causes the ejection head to move in the second direction relative to the printing material supported by the table, and a controller. It is assumed that printing while the ejection head is moving on a forward path heading from one side to the other side in the second direction is forward path printing and printing while the ejection head is moving on a return path heading from the other side to the one side in the second direction is return path printing. The controller includes an acquirer, a data converter, a forward path printing controller, and a return path printing controller. The acquirer acquires image data for which presence or absence of ejection of an ink heading to a position of the printing material corresponding to the forward path in the second direction is instructed and includes a plurality of pieces of row image data prepared for each of the ejection rows. The data converter creates converted image data that is used for the return path printing and includes converted row image data obtained by inverting the row image data, based on the image data. In the returning path printing, the data converter sequentially starts reference to the converted row image data from the ejection row at the other side in the second direction among the plurality of ejection rows and adds empty data before the converted row image data such that inks ejected from the plurality of ejection rows are superimposed and ejection of the inks is sequentially started from the ejection row at the one side in the second direction. The forward path printing controller executes the forward printing by sequentially starting reference to the row image data and starting ejection of the ink from the ejection row at the other side in the second direction among the plurality of ejection rows, based on the image data acquired by the acquirer. The return path printing controller executes the return printing by sequentially starting reference to the converted row image data from the ejection row at the other side in the second direction among the plurality of ejection rows, based on the converted image data created by the data converter and sequentially starting ejection of the inks from the ejection row at the one side in the second direction.

According to the above-described printer, in returning path printing, similar to forward path printing, timing at which ejection of the ink is controlled by sequentially starting reference to the converted row image data from the ejection row at the other side in the second direction and causing the inks ejected from the plurality of ejection rows to be superimposed based on the converted row image data. Accordingly, the ink can be ejected to a proper position in both the forward path printing and the return path printing.

A printing method according to the present disclosure is a printing method of a printer. The printer includes a table that supports a printing material, and an ejection head including a plurality of ejection rows each of which is an ejection row in which ejection ports through which inks are ejected are arranged to align in a first direction and that are arranged to align in a second direction that intersects the first direction. It is assumed that printing when the ejection head is moving on a forward path heading from one side to the other side in the second direction is forward path printing and printing when the ejection head is moving on a return path heading from the other side to the one side in the second direction is return path printing. The printing method includes an acquisition step, a data conversion step, a forward path printing control step, and a return path printing control step. In the acquisition step, image data for which presence or absence of ejection of an ink heading to a position of the printing material corresponding to the forward path in the second direction is instructed and that includes a plurality of pieces of row image data prepared for each of the ejection rows is acquired. In the data conversion step, converted image data that is used for return path printing and includes converted row image data obtained by inverting the row image data is created based on the image data. In the data conversion step, in returning path printing, reference to the converted row image data is sequentially started from the ejection row at the other side in the second direction among the plurality of ejection rows and empty data is added before the converted row image data such that inks ejected from the plurality of ejection rows are superimposed and ejection of the inks is sequentially started from the ejection row at the one side in the second direction. In the forward path printing control step, the forward printing is executed by sequentially starting reference to the row image data and starting ejection of the ink from the ejection row at the other side in the second direction among the plurality of ejection rows, based on the image data acquired in the acquisition step. In the return path printing control step, the return printing is executed by sequentially starting reference to the converted row image data from the ejection row at the other side in the second direction among the plurality of ejection rows, based on the converted image data created in the data conversion step, and sequentially starting ejection of the inks from the ejection row at the one side in the second direction.

### Advantageous Effects of Invention

According to the present invention, a printer and printing method that enables performing printing by ejecting an ink to a proper position when an ejection head is moving in a forward path and a return path in a Y direction can be provided.

### Brief Description of Drawings

Fig. 1 is a perspective view schematically illustrating a printer according to an embodiment.
Fig. 2 is a perspective view schematically illustrating an ejection head.
Fig. 3 is a block diagram of the printer.
Fig. 4 is a right side view schematically illustrating a configuration of a forward path standard mark and a return path standard mark.
Fig. 5 is a diagram conceptually illustrating image data and converted image data.
Fig. 6 is a diagram schematically illustrating control in accordance with a position of the ejection head during forward path printing.
Fig. 7A is a diagram schematically illustrating control in accordance with the position of the ejection head during return path printing.
Fig. 7B is a diagram schematically illustrating control in accordance with the position of the ejection head during return path printing.
Fig. 8 is a flowchart illustrating a series of steps for printing by the printer.

### Description of Embodiments

With reference to the accompanying drawings, an embodiment of the present disclosure will be described below. Note that, as a matter of course, a preferred embodiment described herein is not intended to be particularly limiting the present invention. Also, members and portions that have the same function are denoted by the same reference symbol and redundant description will be omitted or simplified, as proper.

Note that, in this specification, the term "printer" includes so-called two-dimensional printers and three-dimensional printers. A two-dimensional printer ejects a printing ink to paper that is an example of a printing material to print a two-dimensional image on the printing material. A three-dimensional printer is, in other words, a three-dimensional forming device. A three-dimensional printer forms a three-dimensional object by ejecting a hardening liquid, such as a binder, water, or the like, to a powder material that is an example of the printing material to harden the powder material.

In this specification, for a two-dimensional printer, the term "printing material" includes not only various media formed of paper, such as plain paper or the like, but also media formed of various materials, such as a resin material, such as polyvinyl chloride (PVC), polyethylene terephthalate (PET), or the like, a woven fabric, a cloth, aluminum, iron, wood, or the like. For a three-dimensional printer, the term "printing material" includes various materials, such as a powder particulate material, a powder material, or the like, that serve as raw materials of the three-dimensional object.

In this specification, the term "ink" includes various printing inks, such as, for example, a solvent-based pigment ink, a water-based pigment ink, a water-based dye ink, an ultraviolet-curable pigment ink, or the like. The term "ink" also includes various liquids, such as a hardening liquid (for example, a binder) or the like used in forming a three-dimensional object. There is no particular limitation on a method for ejecting an ink in the printer and, for example, an inkjet method is used.

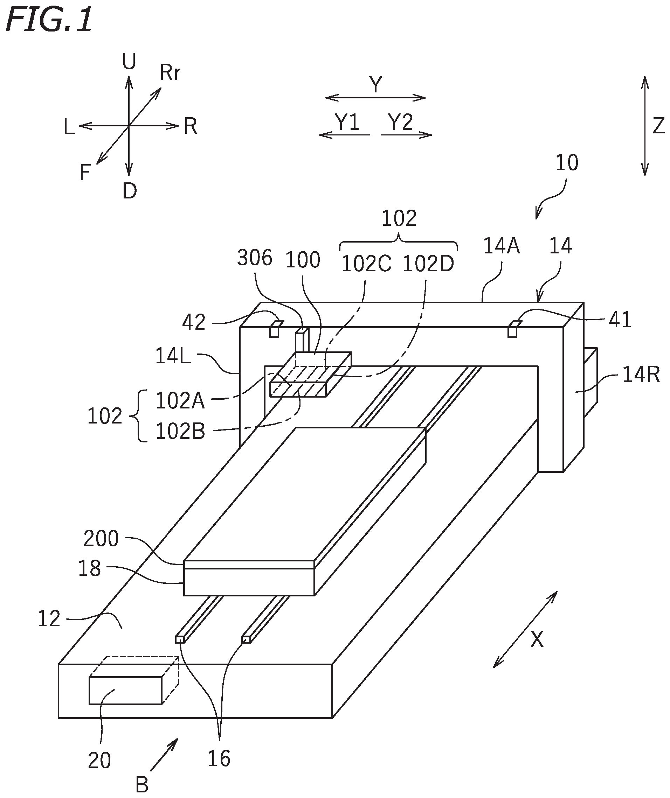

Fig. 1 is a perspective view schematically illustrating a printer 10 according to this preferred embodiment. Herein, reference signs F, Rr, L, R, U, and D in the drawings respectively denote "front," "rear," "left," "right," "up," and "down" of the printer 10. In this preferred embodiment, the printer 10 is arranged in a space defined by an XYZ orthogonal coordinate system formed of an X axis, a Y axis, and a Z axis that are mutually orthogonal to each other. Herein, reference signs X, Y, and Z respectively denote an X direction in which the X-axis extends, a Y direction in which the Y-axis extends, and a Z direction in which the Z-axis extends. For example, the X direction, the Y direction, and the Z direction are a front-back direction, a left-right direction, and an up-down direction, respectively. Herein, the X direction is one example of a first direction. The Y direction is one example of a second direction that intersects the first direction. In this preferred embodiment, a direction heading from one side to the other side in the Y direction is referred to as a forward path Y1. A direction heading from the other side to the one side in the Y direction is referred to as a return path Y2. The one side in the Y direction is, for example, a right side. The other side in the Y direction is, for example, a left side. The forward path Y1 is a direction heading from right to left. The return path Y2 is a direction heading from left to right. However, these are merely directions defined for convenience of description, and do not limit an installation form of the printer 10.

As illustrated in Fig. 1, the printer 10 includes a base 12 and a base member 14. The base 12 is a fixed system member a position of which is fixed. The base 12 extends in the X direction and the Y direction. For example, the base 12 has a rectangular shape that is longer in the X direction than in the Y direction.

The base member 14 is arranged to be fixed to the base 12. At least a portion of the base member 14 is arranged above the base 12, that is, in a position overlapping with the base 12 in a plan view. In this preferred embodiment, as illustrated in Fig. 1, the base member 14 includes a main portion 14A, a left support portion 14L, and a right support portion 14R. The main portion 14A is arranged above the base 12 and extends in the Y direction. The main portion 14A is positioned above the base 12 and overlaps with the base 12 in a plan view. The left support portion 14L is arranged at left of the base 12 and extends in the Z-direction. The left support portion 14L supports the main portion 14A and is connected to a left end portion of the main portion 14A. The right support member 14R is arranged at right of the base 12 and extends in the Z direction. The right support member 14R supports the main member 14A and is connected to a right end portion of the main member 14A. The main member 14A is bridged across the left support member 14L and the right support member 14R.

As illustrated in Fig. 1, the printer 10 includes an X rail 16 and a table 18. The X-rail 16 is provided to the base 12. Herein, the X-rail 16 is provided on an upper surface of the base 12. The X-rail 16 extends in the X direction. There is no particular limitation on the number of X-rails 16. Herein, the number of X-rails 16 is two. The two X-rails 16 are arranged to align in the Y direction.

The table 18 supports a printing material 200. Herein, the table 18 extends in the X direction and the Y direction. The printing material 200 is placed on an upper surface of the table 18. In this preferred embodiment, the printer 10 performs printing on the printing material 200 supported by the table 18. In the following description, the printing material 200 refers to the printing material 200 in a state of being supported by the table 18. In this preferred embodiment, the table 18 is slidably engaged with the X-rail 16. The table 18 is configured to be movable along the X-rail 16 in the X direction. Herein, the table 18 is configured to pass under the main portion 14A of the base member 14 when the table 18 moves in the X direction (for example, in a direction B in Fig. 1).

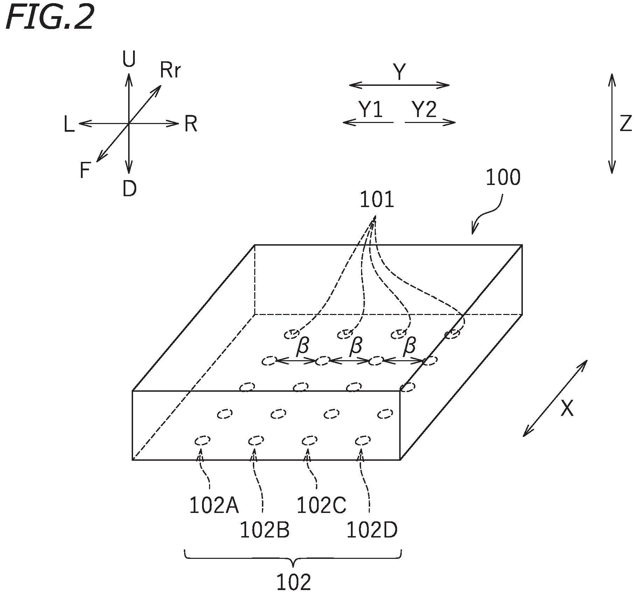

The printer 10 includes an ejection head 100. The ejection head 100 ejects an ink. Fig. 2 is a perspective view schematically illustrating the ejection head 100. In this preferred embodiment, a plurality of ejection ports 101 are formed in the ejection head 100. The ejection ports 101 eject inks. The ejection ports 101 are formed at a bottom surface of the ejection head 100. The plurality of ejection ports 101 are arranged in a row in the X direction. Herein, a row of the plurality of ejection ports 101 arranged in the X direction is referred to as an ejection row 102. Note that there is no particular limitation on the number of the ejection ports 101 forming a single ejection row 102. In Fig. 2, for convenience of description, the number of the ejection ports 101 forming the ejection row 102 is five, but in practice, the ejection row 102 is formed of even more ejection ports 101.

As illustrated in Fig. 2, there are multiple ejection rows 102. However, the specific number of the ejection rows 102 is not particularly limited. In this preferred embodiment, the number of the ejection rows 102 is four. The ejection rows 102 include a first ejection row 102A, a second ejection row 102B, a third ejection row 102C, and a fourth ejection row 102D. In this preferred embodiment, the ejection rows 102 are arranged in an order of the first the ejection row 102A, the second ejection row 102B, the third ejection row 102C, and the fourth ejection row 102D from the other side (herein, the left side) to the one side (herein, the right side) in the Y direction. Herein, a space between any adjacent two of the first ejection row 102A to the fourth ejection row 102D in the Y direction is uniform. For example, a space between the first ejection row 102A and the second ejection row 102B, a space between the second ejection row 102B and the third ejection row 102C, and a space between the third ejection row 102C and the fourth ejection row 102D are all the same standard space β. The standard space β is not particularly limited to a specific numerical value, but is, for example, 11 mm.

In the following description, the term "ejecting an ink from the ejection row 102" refers to ejecting inks from the plurality of ejection ports 101 that form the ejection row 102. Each of the ejection rows 102 ejects an ink of a different color. The ink that is ejected from the ejection row 102 may be, for example, a process color ink, and may be some other ink than the process color ink, that is, for example, a special color ink. In this preferred embodiment, a process color ink is ejected from each of the ejection rows 102. Specifically, the first ejection row 102A ejects a black ink. The second ejection row 102B ejects a cyan ink. The third ejection row 102C ejects a magenta ink. The fourth ejection row 102D ejects a yellow ink.

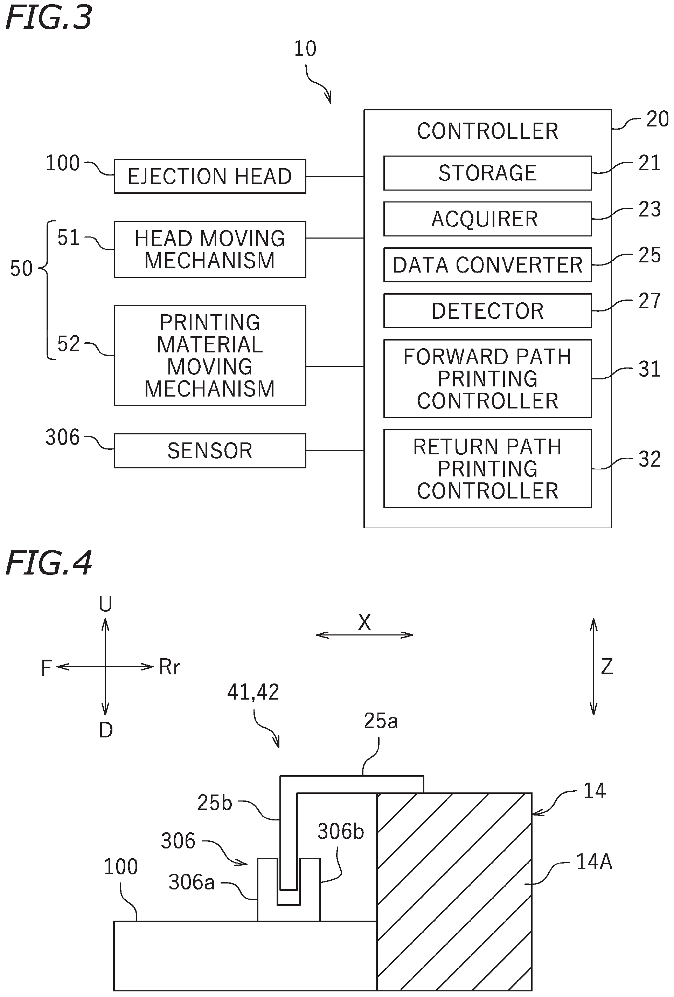

Fig. 3 is a block diagram of the printer 10. As illustrated in Fig. 3, the printer 10 includes a moving mechanism 50. The moving mechanism 50 is a mechanism that causes the printing material 200 supported by the table 18 and the ejection head 100 to move relatively. The moving mechanism 50 includes a head moving mechanism 51 and a printing material moving mechanism 52. The head moving mechanism 51 is a mechanism that causes the ejection head 100 to move in the Y direction along the base member 14 (specifically, the main portion 14A (see Fig. 1)). Herein, the head moving mechanism 51 is a mechanism that causes the ejection head 100 to move on the forward path Y1 and the return path Y2 in the Y direction. The printing material moving mechanism 52 is a mechanism that causes the printing material 200 supported by the table 18 to move along the X rail 16 in the X direction. Herein, the printing material moving mechanism 52 can cause the printing material 200 supported by the table 18 to move in the X direction by causing the table 18 to move along the X rail 16 in the X direction. There is no particular limitation on a configuration of the head moving mechanism 51 and the printing material moving mechanism 52. As the head moving mechanism 51, a known mechanism that causes the ejection head 100 to move in the Y direction may be employed. The printing material moving mechanism 52 can employ a known mechanism that causes the printing material 200 supported by the table 18 to move in the X direction.

In this preferred embodiment, as illustrated in Fig. 3, the printer 10 includes a controller 20. The controller 20 is a device that performs control related to printing. The controller 20 comprehensively controls an operation of each component of the printer 10. There is no particular limitation on a configuration of the controller 20. The controller 20 is constituted of, for example, a microcomputer. There is no particular limitation on a hardware configuration of the microcomputer, but the microcomputer includes, for example, an interface (I/F) that receives image data or the like from an external device, such as a host computer or the like, a central processing unit (CPU) that executes an instruction of a control program, and a read only memory (ROM) that stores the program that is executed by the CPU, and a random access memory (RAM) that is used as a working area in which the program is developed, a storage device in which various types of data, such as a control program or the like, are stored. As illustrated in Fig. 1, the controller 20 is provided, for example, in the base 12. However, the controller 20 may not be provided in the base 12. For example, the controller 20 may be realized by a computer installed outside the base 12. In this case, the controller 20 is communicably connected to a control board (not illustrated) of the printer 10 via a wired or wireless connection.

In this preferred embodiment, as illustrated in Fig. 3, the controller 20 is communicatively connected to the ejection head 100 and the moving mechanism 50 (herein, the head moving mechanism 51 and the printing material moving mechanism 52). The controller 20 controls timing of ejecting ink for each of the ejection rows 102 of the ejection head 100. The controller 20 controls movement of the ejection head 100 in the Y direction (herein, on the forward path Y1 and the return path Y2) by controlling driving of the head moving mechanism 51. The controller 20 controls movement of the table 18 in the X direction by controlling driving of the printing material moving mechanism 52.

In this preferred embodiment, as illustrated in Fig. 3, the controller 20 includes a storage 21, an acquirer 23, a data converter 25, a detector 27, a forward path printing controller 31, and a return path printing controller 32. Each of the components 21 to 32 of the controller 20 may be realized by hardware and may be realized by software. Moreover, each of the components 21 to 32 of the controller 20 may be realized by one or more processors and may be realized by a circuit. Note that details of control related to the acquirer 23, the data converter 25, the detector 27, the forward path printing controller 31, and the return path printing controller 32 will be described later.

Incidentally, in the printer 10 according to this preferred embodiment, the inks are ejected from the ejection ports 101 of the ejection head 100 toward the printing material 200 supported by the table 18 while the ejection head 100 is moving in the Y direction. The inks are ejected to the printing material 200 in the above-described manner, and thus, printing is performed on the printing material 200. In this preferred embodiment, printing is performed by ejecting the inks from the ejection ports 101 while the ejection head 100 is moving on the forward path Y1 in the Y direction and the ejection head 100 is moving on the return path Y2 in the Y direction. Herein, printing performed by ejecting the inks from the ejection ports 101 while the ejection head 100 is moving on the forward path Y1 is referred to as forward path printing. Printing performed by ejecting the inks from the ejection ports 101 while the ejection head 100 is moving on the return path Y2 is referred to as return path printing.

In this preferred embodiment, as illustrated in Fig. 1, the printer 10 includes a forward path standard mark 41, a return path standard mark 42, and a sensor 306. Herein, the forward path standard mark 41 indicates a position serving as a standard for starting in forward path printing. Herein, using the forward path standard mark 41 as a standard, timing at which the ink is ejected from each of the ejection rows 102 (herein, the first ejection row 102A to the fourth ejection row 102D) during forward path printing is determined. The return path standard mark 42 indicates a position serving as a standard for starting in return path printing. Herein, using the return path standard mark 42 as a standard, timing at which the ink is ejected from each of the ejection rows 102 (herein, the first ejection row 102A to the fourth ejection row 102D) during return path printing is determined. The sensor 306 detects the forward path standard mark 41 and the return path standard mark 42 (specifically, positions of the forward path standard mark 41 and the return path standard mark 42 in the Y direction).

Note that there is no particular limitation on the positions where the forward path standard mark 41 and the return path standard mark 42 are provided as long as the positions can be detectable by the sensor 306. Herein, the forward path standard mark 41 and the return path standard mark 42 are arranged to align in the Y direction. In this preferred embodiment, as illustrated in Fig. 1, the forward path standard mark 41 and the return path standard mark 42 are provided on the base member 14. Herein, the forward path standard mark 41 is provided at a print start side (herein, a right side) of forward path printing on the base member 14 with the table 18 as a standard. The forward path standard mark 41 is provided at a right end portion of the main portion 14A of the base member 14. The forward path standard mark 41 is arranged more rightward than the table 18 and is provided in a portion of the main portion 14A located at a side more rightward than the table 18. The return path standard mark 42 is provided at a print start side (herein, a left side) of return path printing on the base member 14 with the table 18 used as a standard. The return path standard mark 42 is provided at a left end portion of the main portion 14A of the base member 14. The return path standard mark 42 is arranged more leftward than the table 18 and is provided in a portion of the main portion 14A located at a side more leftward than the table 18. The return path standard mark 42 is provided more leftward than the forward path standard mark 41.

There is no particular limitation on specific types of the forward path standard mark 41 and the return path standard mark 42. Fig. 4 is a right side view schematically illustrating a configuration of the forward path standard mark 41 and the return path standard mark 42. In this preferred embodiment, as illustrated in Fig. 4, the forward path standard mark 41 and the return path standard mark 42 are formed of a light-shielding plate formed into an L-shape. Herein, the forward path standard mark 41 and the return path standard mark 42 have similar configurations. Herein, each of the forward path standard mark 41 and the return path standard mark 42 includes a support plate 25a that extends forward from the base member 14 (herein, the main portion 14A) and a detected plate 25b supported by the support plate 25a. Herein, the detected plate 25b extends downward from the support plate 25a. The detected plate 25b is arranged so as to be spaced apart from the base member 14 (for example, the main portion 14A). The detected plate 25b is positioned more forward than the base member 14.

As illustrated in Fig. 1, the sensor 306 is provided on the ejection head 100. Therefore, the sensor 306 is configured to be movable in the Y direction together with the ejection head 100. In this preferred embodiment, the sensor 306 is provided in a left end portion of the ejection head 100. The sensor 306 protrudes upward from the ejection head 100. However, there is no particular limitation on a position of the sensor 306 relative to the ejection head 100. For example, the sensor 306 may be provided in a central portion of the ejection head 100 in the Y direction. The sensor 306 may be provided to protrude in the Y direction (for example, leftward or rightward) from the ejection head 100. In this preferred embodiment, as illustrated in Fig. 3, the controller 20 is communicatively connected to the sensor 306. The controller 20 can acquire presence or absence of detection of the forward path standard mark 41 and the return path standard mark 42 via the sensor 306. Moreover, the controller 20 can detect the position of the forward path standard mark 41 in the Y direction and the position of the return path standard mark 42 in the Y direction via the sensor 306.

There is no particular limitation on type and configuration of the sensor 306. In this preferred embodiment, the sensor 306 is a photo interrupter. Herein, as illustrated in Fig. 4, the sensor 306 includes a light emitter 306a that emits light and a light receiver 306b that receives light. The light emitter 306a and the light receiver 306b are provided as a pair. For example, the light emitter 306a and the light receiver 306b are arranged to align in the X direction so as to be spaced apart from each other. The light emitted from the light emitter 306a is received by the light receiver 306b. In this preferred embodiment, when the ejection head 100 is moving in the Y direction, the forward path standard mark 41 or the return path standard mark 42 (specifically, the detected plate 25b of the forward path standard mark 41 or the return path standard mark 42) passes between the light emitter 306a and the light receiver 306b of the sensor 306. Herein, when the forward path standard mark 41 or the return path standard mark 42 is positioned between the light emitter 306a and the light receiver 306b, the light emitted from the light emitter 306a is blocked by the detected plate 25b and does not reach the light receiver 306b. As described above, when the light receiver 306b cannot receive the light emitted from the light emitter 306a, the sensor 306 can detect the forward path standard mark 41 or the return path standard mark 42. At this time, the controller 20 detects the position of the forward path standard mark 41 in the Y direction and the position of the return path standard mark 42 in the Y direction in accordance with the position of the sensor 306 in the Y direction.

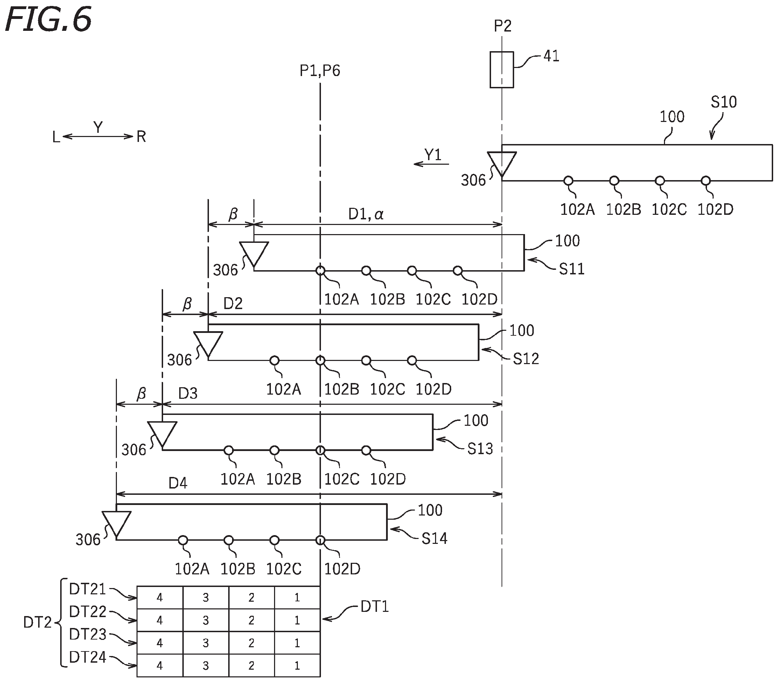

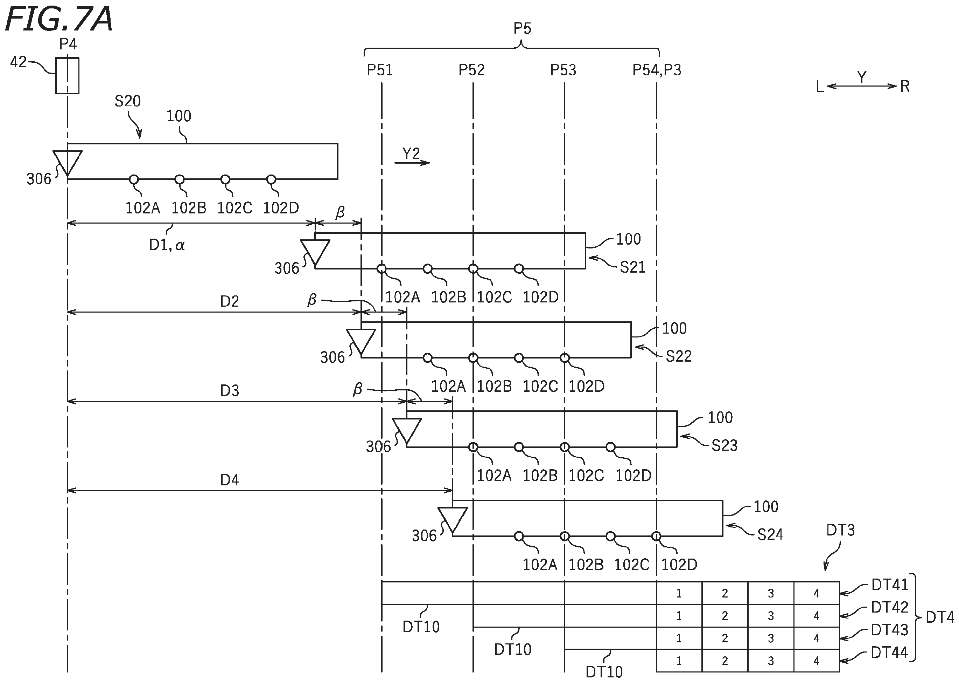

In this preferred embodiment, the position of the sensor 306 in the Y direction when the forward path standard mark 41 is detected by the sensor 306 is referred to as a forward path detection position P2 (see Fig. 6). The position of the sensor 306 in the Y direction when the return path standard mark 42 is detected by the sensor 306 is referred to as a return path detection position P4 (see Fig. 7A).

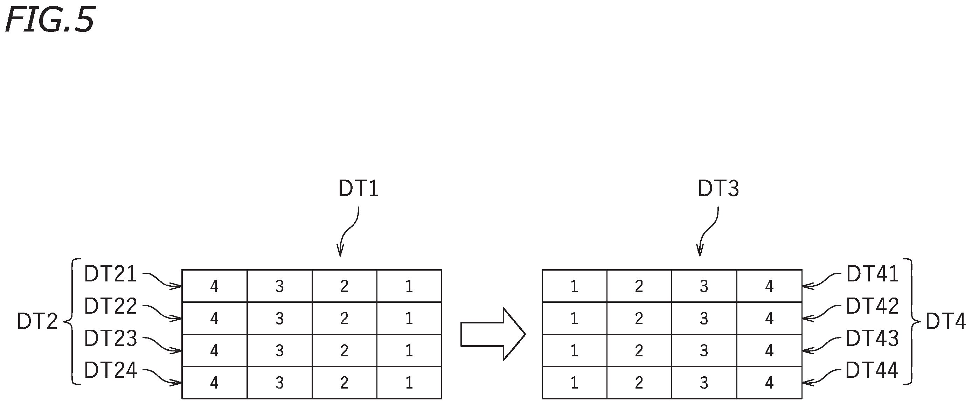

Fig. 5 is a diagram conceptually illustrating image data DT1 and converted image data DT3. In this preferred embodiment, the printer 10 performs printing on the printing material 200 by controlling the timing of ejecting the inks, based on the image data DT1 illustrated in Fig. 5. Herein, the image data DT1 prepared in advance is data that is used during forward path printing and data that is used during printing while the ejection head 100 is moving on the forward path Y1 in the Y direction (that is, from right to left). The image data DT1 includes row image data DT2 for each of the ejection rows 102. Herein, the image data DT1 includes, as the row image data DT2, first row image data DT21 corresponding to the first ejection row 102A, second row image data DT22 corresponding to the second ejection row 102B, third row image data DT23 corresponding to the third ejection row 102C, and fourth row image data DT24 corresponding to the fourth ejection row 102D. Note that for convenience of description, in each row image data DT2, the data is arranged in an order of 1, 2, 3, and 4 from right to left on the paper surface of Fig. 5.

Each row image data DT2 indicates presence or absence of an ink heading toward a position of the printing material 200 corresponding to the forward path Y1 in the Y direction. Herein, each row image data DT2 includes data (for example, data regarding presence or absence of ejection) related to ejection of the ink to a portion of the printing material 200 corresponding to the position in the Y direction in the ejection row 102. Therefore, the row image data DT2 can be continuous data from right to left in the Y direction. In an example of Fig. 5, the data is processed in the order of 1, 2, 3, and 4 in each row image data DT2.

Fig. 6 is a diagram schematically illustrating control in accordance with the position of the ejection head 100 during forward path printing. In this preferred embodiment, as illustrated in Fig. 6, in forward path printing, printing based on the row image data DT2 is started for the first ejection row 102A to the fourth ejection row 102D at timing at which the first ejection row 102A to the fourth ejection row 102D pass a forward path standard position P1 set in advance in the Y direction. Herein, the forward path standard position P1 is the same position as the forward reference position P6. In forward path printing, when the first ejection row 102A to the fourth ejection row 102D pass a forward path reference position P6 set in advance in the Y direction, reference to the row image data DT2 is started. That is, in forward path printing, start of the printing based on the row image data DT2 and start of the reference to the row image data DT2 simultaneously occur.

In forward path printing, the plurality of the ejection rows 102 sequentially pass the forward path standard position P1 starting from the ejection row 102 positioned on the other side (herein the left side) in the Y direction among the ejection rows 102. Specifically, during forward path printing, the first ejection row 102A, the second ejection row 102B, the third ejection row 102C, and the fourth ejection row 102D pass the forward path standard position P1 in this order. Therefore, during forward path printing, printing (in other words, ink ejection control) is started in the order of the first ejection row 102A, the second ejection row 102B, the third ejection row 102C, and the fourth ejection row 102D. In this preferred embodiment, the forward path standard position P1 and the forward reference position P6 are determined based on the forward path detection position P2 of the forward path standard mark 41. Herein, the forward path standard position P1 and the forward reference position P6 are positioned more leftward than the forward path detection position P2.

Next, control steps during the forward path printing will be described. Forward path printing is realized by the forward path printing controller 31 of Fig. 3. In forward path printing, printing is started in a state where the sensor 306 provided on the ejection head 100 is positioned more rightward than the forward path standard mark 41. Herein, the forward path printing controller 31 first controls the head moving mechanism 51 (see Fig. 3) to cause the ejection head 100 to move on the forward path Y1 in the Y direction. Thereafter, as illustrated in a state S10 of Fig. 6, the detector 27 of Fig. 3 detects the forward path detection position P2 at the forward path standard mark 41 when the sensor 306 passes the forward path standard mark 41 while the ejection head 100 is moving on the forward path Y1.

In this preferred embodiment, after the sensor 306 detects the forward path standard mark 41, a position of the first ejection row 102A when the ejection head 100 is caused to move from the forward path detection position P2 by a first moving distance D1 set in advance on the forward path Y1, as illustrated in a state S11 of Fig. 6, is the forward path standard position P1. Herein, the first moving distance D1 is an initial distance α. There is no particular limitation on a specific numerical value of the initial distance α, but the specific numerical value of the initial distance α is, for example, 17.6 mm. The forward path printing controller 31 causes the ejection head 100 to move from the forward path detection position P2 by the first moving distance D1 on the forward path Y1, as in the state S11, and, when the first ejection row 102A passes the forward path standard position P1, starts printing based on the first row image data DT21 by the first ejection row 102A. Herein, after the ejection head 100 is caused to move from the forward path detection position P2 by the first moving distance D1 on the forward path Y1, control of causing an ink (herein, a black ink) to be ejected to the printing material 200 from the first ejection row 102A, based on the first row image data DT21 while causing the ejection head 100 to move on the forward path Y1.

In this preferred embodiment, as in the state S11 of Fig. 6, after the first ejection row 102A reaches the forward path standard position P1, when the ejection head 100 further moves on the forward path Y1 by the standard space β that is the space between the first ejection row 102A and the second ejection row 102B, a position of the second ejection row 102B in the Y direction is the forward path standard position P1, as illustrated in a state S12. Herein, the position of the second ejection row 102B in the Y direction when the ejection head 100 has moved from the forward path detection position P2 by a predetermined second moving distance D2 on the forward path Y1 is the forward path standard position P1. Herein, the second moving distance D2 is longer than the first moving distance D1. The second moving distance D2 is, for example, the initial distance α + the standard space β. In this preferred embodiment, the forward path printing controller 31 causes the ejection head 100 to move from the forward path detection position P2 by the second moving distance D2 on the forward path Y1 and, when the second ejection row 102B passes the forward path standard position P1, starts printing based on the second row image data DT22 by the second ejection row 102B. Herein, after causing the ejection head 100 to move from the forward path detection position P2 by the second moving distance D2 on the forward path Y1, the forward path printing controller 31 performs control of causing an ink (herein, a cyan ink) to be ejected to the printing material 200 from the second ejection row 102B, based on the second row image data DT22, while causing the ejection head 100 to move on the forward path Y1. At this time, the cyan ink ejected from the second ejection row 102B is ejected to the printing material 200 so as to be superimposed on the black ink that has been already ejected to the printing material 200.

As in the state S12 of Fig. 6, after the second ejection row 102B reaches the forward path standard position P1, when the ejection head 100 further moves on the forward path Y1 by the standard space β that is a space between the second ejection row 102B and the third ejection row 102C, the position of the third ejection row 102C in the Y direction is the forward path standard position P1, as illustrated in a state S13. Herein, the position of the third ejection row 102C in the Y direction when the ejection head 100 has moved from the forward path detection position P2 by a predetermined third moving distance D3 on the forward path Y1 is the forward path standard position P1. Herein, the third moving distance D3 is longer than each of the first moving distance D1 and the second moving distance D2. The third moving distance D3 is, for example, the initial distance α + the standard space β × 2. In this preferred embodiment, the forward path printing controller 31 causes the ejection head 100 to move from the forward path detection position P2 by the third moving distance D3 on the forward path Y1 and, when the third ejection row 102C passes the forward path standard position P1, starts printing based on the third row image data DT23 by the third ejection row 102C. Herein, after causing the ejection head 100 to move from the forward path detection position P2 by the third moving distance D3 on the forward path Y1, the forward path printing controller 31 performs control of causing an ink (herein, a magenta ink) to be ejected to the printing material 200 from the third ejection row 102C, based on the third row image data DT23, while causing the ejection head 100 to move on the forward path Y1. At this time, the magenta ink ejected from the third ejection row 102C is ejected to the printing material 200 so as to be superimposed on the black ink and the cyan ink that have been already ejected to the printing material 200.

As in the state S13 of Fig. 6, after the third ejection row 102C reaches the forward path standard position P1, when the ejection head 100 further moves on the forward path Y1 by the standard space β that is a space between the third ejection row 102C and the fourth ejection row 102D, the position of the fourth ejection row 102D in the Y direction is the forward path standard position P1, as illustrated in a state S14. Herein, the position of the fourth ejection row 102D in the Y direction when the ejection head 100 has moved from the forward path detection position P2 by a predetermined fourth moving distance D4 on the forward path Y1 is the forward path standard position P1. Herein, the fourth moving distance D4 is longer than each of the first moving distance D1 to the third moving distance D3. The fourth moving distance D4 is, for example, the initial distance α + the standard space β × 3. In this preferred embodiment, the forward path printing controller 31 causes the ejection head 100 to move from the forward path detection position P2 by the fourth moving distance D4 on the forward path Y1 and, when the fourth ejection row 102D passes the forward path standard position P1, starts printing based on the fourth row image data DT24 by the fourth ejection row 102D. Herein, after causing the ejection head 100 to move from the forward path detection position P2 by the fourth moving distance D4 on the forward path Y1, the forward path printing controller 31 performs control of causing an ink (herein, a yellow ink) to be ejected to the printing material 200 from the fourth ejection row 102D, based on the fourth row image data DT24, while causing the ejection head 100 to move on the forward path Y1. At this time, the yellow ink ejected from the fourth ejection row 102D is ejected to the printing material 200 so as to be superimposed on the black ink, the cyan ink, and the magenta ink that have been already ejected to the printing material 200. In the above-described manner, forward path printing can be properly performed based on the image data DT1.

Incidentally, during return path printing, the ejection head 100 moves from left to right in the Y direction, and meanwhile, printing is performed. The row image data DT2 (see Fig. 5) of the above-described image data DT1 is data used for forward path printing and is data on assumption that the ejection head 100 moves from right to left in the Y direction. Therefore, when it is supposed that return path printing is to be performed based on the image data DT1 illustrated in Fig. 5, there is a probability that a laterally inverted image is printed on the printing material 200, as compared to an image printed during forward path printing. Furthermore, during return path printing, when the ejection head 100 moves on the return path Y2, the fourth ejection row 102D, the third ejection row 102C, the second ejection row 102B, and the first ejection row 102A pass an arbitrary position in the Y direction in this order. Herein, for example, assume that, for example, during return path printing, control of ejection of the ink is started on the first ejection row 102A, the second ejection row 102B, the third ejection row 102C, and the fourth ejection row 102D in this order in accordance with a distance by which similar control to control for forward path printing has been performed, that is, the ejection head 100 has moved on the return path Y2. In this case, for example, after the ejection head 100 has moved on the return path Y2 by the standard space β since control of ejection of the ink of the first ejection row 102A was started, control of ejection of the ink of the second ejection row 102B can be started. Therefore, although, on the image data DT1, the black ink, the cyan ink, the magenta ink, and the yellow ink are ejected to an arbitrary portion of the printing material 200 so as to be superimposed on each other, there is a probability, in actual return path printing, the black ink, the cyan ink, the magenta ink, and the yellow ink are ejected so as to be separated from each other.

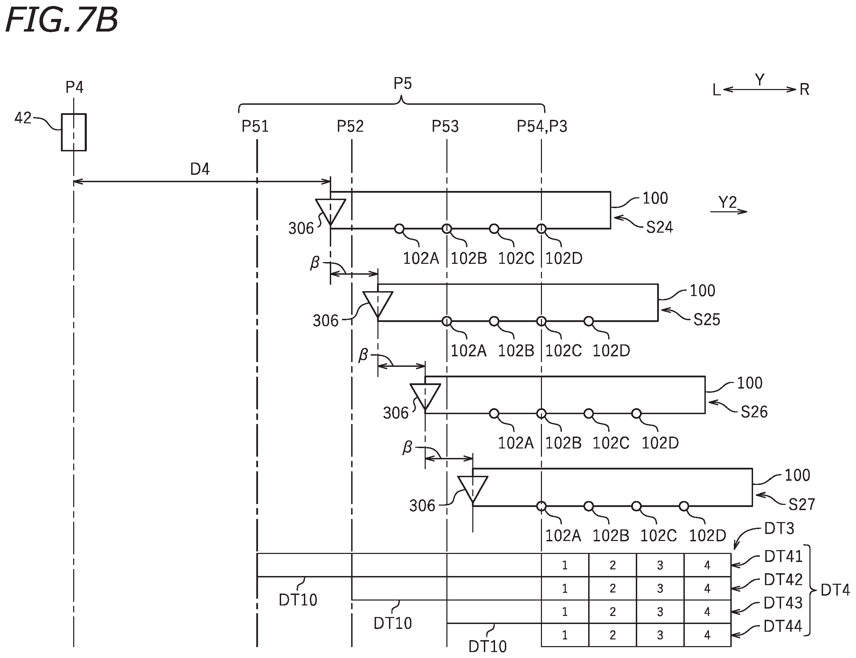

Therefore, in this preferred embodiment, the controller 20 performs different control from control for forward path printing during return path printing. Herein, return path printing is realized by the return path printing controller 32 of Fig. 3. Fig. 7A and Fig. 7B are diagrams each schematically illustrating control corresponding to the position of the ejection head 100 during return path printing. In this preferred embodiment, for the first ejection row 102A to the fourth ejection row 102D, during return path printing, control of ejection of the inks is started at timing at which the ejection head 100 reaches a return path standard position P3 (see Fig. 7A) set in advance in the Y direction. In return path printing, the plurality of ejection rows 102 sequentially reach the return path standard position P3 from the ejection row 102 at one side (herein, the right side) in the Y direction among the ejection rows 102. Specifically, during return path printing, the fourth ejection row 102D, the third ejection row 102C, the second ejection row 102B, and the first ejection row 102A pass the return path standard position P3 in this order. Therefore, during return path printing, printing (in other words, control of ejection of the inks) is started in an order of the fourth ejection row 102D, the third ejection row 102C, the second ejection row 102B, and the first ejection row 102A. In this preferred embodiment, the return path standard position P3 is determined based on the return path detection position P4 of the return path standard mark 42. Herein, the return path standard position P3 is positioned more rightward than the return path detection position P4.

In this preferred embodiment, as illustrated in Fig. 5, the image data DT1 used for forward path printing is converted to create the converted image data DT3 used for return path printing. That is, the converted image data DT3 is created based on the image data DT1. The converted image data DT3 is data that is used during return path printing and is data that is used during printing when the ejection head 100 is moving on the return path Y2 (that is, from left to right) in the Y direction. The converted image data DT3 includes converted row image data DT4 for each of the ejection rows 102. Herein, the converted image data DT3 includes, as the converted row image data DT4, first converted row image data DT41 corresponding to the first ejection row 102A, second converted row image data DT42 corresponding to the second ejection row 102B, third converted row image data DT43 corresponding to the third ejection row 102C, and fourth converted row image data DT44 corresponding to the fourth ejection row 102D.

In this preferred embodiment, creation of the converted image data DT3 is realized by the data converter 25 of Fig. 3. The data converter 25 creates the converted row image data DT4 by inverting the row image data DT2 of the image data DT1. Herein, the row image data DT2 is data aligned in the Y direction. Inverting the row image data DT2 refers to flipping the row image data DT2 in the Y direction (herein, laterally inverting the row image data DT2). As illustrated in Fig. 5, in each row image data DT2, the data is arranged in an order 1, 2, 3, and 4 from right to left. In the converted row image data DT4 obtained by inverting the row image data DT2, data is arranged in the order of 1, 2, 3, and 4 from left to right on the paper surface of Fig. 5.

Herein, the data converter 25 creates the first converted row image data DT41 from the first row image data DT21 by inverting the first row image data DT21. The data converter 25 creates the second converted row image data DT42 from the second row image data DT22 by inverting the second row image data DT22. Similarly, the data converter 25 creates the third converted row image data DT43 from the third row image data DT23 by inverting the third row image data DT23, and creates the fourth converted row image data DT44 from the fourth row image data DT24 by inverting the fourth row image data DT24.

Incidentally, in this preferred embodiment, the timing at which reference to the converted image data DT3 is started during return path printing is substantially the same as timing at which reference to the image data DT1 is started during forward path printing. In return path printing, printing is started in a state where the sensor 306 provided on the ejection head 100 is positioned more leftward than the return path standard mark 42. Herein, the return path printing controller 32 first controls the head moving mechanism 51 (see Fig. 3) to cause the head moving mechanism 51 to move the ejection head 100 on the return path Y2 in the Y direction. Thereafter, while the ejection head 100 is moving on the return path Y2, as illustrated in a state S20 of Fig. 7A, the sensor 306 passes the return path standard mark 42, and thus, the detector 27 of Fig. 3 detects the return path detection position P4 at the return path standard mark 42.

In this preferred embodiment, a return path reference position P5 (see Fig. 7A) that serves as a standard for starting reference to the converted row image data DT4 during return path printing is set in advance. Herein, as illustrated in Fig. 7A, the return path reference position P5 includes a first return path reference position P51 where reference to the first converted row image data DT41 is started, a second return path reference position P52 where reference to the second converted row image data DT42 is started, a third return path reference position P53 where reference to the third converted row image data DT43 is started, and a fourth return path reference position P54 where reference to the fourth converted row image data DT44 is started. The return path reference position P5 (herein, the first return path reference position P51, the second return path reference position P52, the third return path reference position P53, and the fourth return path reference position P54) is positioned more leftward than the return path standard position P3 where control of ejection of the inks is started during return path printing, or at the same position as the return path standard position P3.

Herein, as illustrated in a state S21 of Fig. 7A, the position of the first ejection row 102A in the Y direction when the ejection head 100 is caused to move from the return path detection position P4 by the first moving distance D1 on the return path Y2 is the first return path reference position P51. The first moving distance D1 is the initial distance α, as described above. The return path printing controller 32 causes the ejection head 100 to move from the return path detection position P4 by the first moving distance D1 on the return path Y2, as in the state S21, and, when the first ejection row 102A passes the first return path reference position P51, starts reference to the first converted row image data DT41. Moreover, after the first ejection row 102A reaches the first return path reference position P51, as illustrated in a state S22 of Fig. 7A, the position of the second ejection row 102B in the Y direction when the ejection head 100 has further moved on the return path Y2 by the standard space β that is the space between the first ejection row 102A and the second ejection row 102B is the second return path reference position P52. Herein, the position of the second ejection row 102B in the Y direction when the ejection head 100 has moved from the return path detection position P4 by the second moving distance D2 on the return path Y2 is the second return path reference position P52. The return path printing controller 32 causes the ejection head 100 to move from the return path detection position P4 by the second moving distance D2 on the return path Y2, as in the state S22, and, when the second ejection row 102B passes the second return path reference position P52, starts reference to the second converted row image data DT42. The second moving distance D2 is the initial distance α + the standard space β, as described above.

After the second ejection row 102B reaches the second return path reference position P52, as illustrated in a state S23 of Fig. 7A, the position of the third ejection row 102C in the Y direction when the ejection head 100 has further moved by the standard space β that is the space between the second ejection row 102B and the third ejection row 102C on the return path Y2 is the third return path reference position P53. Herein, the position of the third ejection row 102C in the Y direction when the ejection head 100 has moved from the return path detection position P4 by the third moving distance D3 on the return path Y2 is the third return path reference position P53. The return path printing controller 32 causes the ejection head 100 to move from the return path detection position P4 by the third moving distance D3 on the return path Y2, as in the state S23, and, when the third ejection row 102C passes the third return path reference position P53, starts reference to the third converted row image data DT43. Note that the third moving distance D3 is the initial distance α + the standard space β × 2, as described above. Moreover, after the third ejection row 102C reaches the third return path reference position P53, as illustrated in a state S24 of Fig. 7A, the position of the fourth ejection row 102D in the Y direction when the ejection head 100 has further moved on the return path Y2 by the standard space β that is the space between the third ejection row 102C and the fourth ejection row 102D is the fourth return path reference position P54. Herein, the position of the fourth ejection row 102D in the Y direction when the ejection head 100 has moved from the return path detection position P4 by the fourth moving distance D4 on the return path Y2 is the fourth return path reference position P54. The return path printing controller 32 causes the ejection head 100 to move from the return path detection position P4 by the fourth moving distance D4, as in the state S24, and, when the fourth ejection row 102D passes the fourth return path reference position P54, starts reference to the fourth converted row image data DT44. Note that the fourth moving distance D4 is the initial distance α + the standard space β × 3, as described above.

In this preferred embodiment, when the return path printing controller 32 starts reference to the converted row image data DT4, the return path printing controller 32 controls ejection of the ink at a timing based on the converted row image data DT4. However, in this preferred embodiment, as illustrated in Fig. 7A, the first return path reference position P51, the second return path reference position P52, and the third return path reference position P53 are positioned more leftward than the return path standard position P3 where ejection of the inks is started during return path printing. The fourth return path reference position P54 is the same as the return path standard position P3 in the Y direction. In this preferred embodiment, ejection of the inks based on each converted row image data DT4 of the converted image data DT3 is started at timing at which the first ejection row 102A to the fourth ejection row 102D pass the return path standard position P3. Therefore, the ink is kept from being ejected from the first ejection row 102A until the first ejection row 102A moves from the first return path reference position P51 to the return path standard position P3. Similarly, the ink is kept from being ejected from the second ejection row 102B until the second ejection row 102B moves from the second return path reference position P52 to the return path standard position P3. Moreover, the ink is kept from being ejected from the third ejection row 102C until the third ejection row 102C moves from the third return path reference position P53 to the return path standard position P3.

Therefore, in this preferred embodiment, even when the converted row image data DT4 is referred to, the data converter 25 adds empty data DT10 to the converted row image data DT4, as illustrated in Fig. 7A, such that the ink is not ejected until the ejection row 102 reaches the return path standard position P3. In return path printing, the data converter 25 starts reference to the converted row image data DT4 sequentially for the plurality of ejection rows 102 from the first ejection row 102A at the other side (herein, the left side) in the Y direction among the ejection rows 102 and adds the empty data DT10 before the converted row image data DT4 such that the inks ejected from the plurality of ejection rows 102 are superimposed. In this preferred embodiment, the data converter 25 adds the empty data DT10 to the first converted row image data DT41 such that the empty data DT10 is referred to while the first ejection row 102A moves from the first return path reference position P51 to the return path standard position P3. Herein, the empty data DT10 added to the first converted row image data DT41 is added before the first converted row image data DT41. A length of the empty data DT10 that is added to the first converted row image data DT41 corresponds to a length along which the first ejection row 102A moves from the first return path reference position P51 to the return path standard position P3 during return path printing. The length of the empty data DT10 that is added to the first converted row image data DT41 is, for example, the standard space β × 6.

The data converter 25 adds the empty data DT10 to the second converted row image data DT42 such that the empty data DT10 is referred to while the second ejection row 102B moves from the second return path reference position P52 to the return path standard position P3. Herein, the empty data DT10 that is added to the second converted row image data DT42 is added before the second converted row image data DT42. A length of the empty data DT10 added to the second converted row image data DT42 corresponds to a length along which the second ejection row 102B moves from the second return path reference position P52 to the return path standard position P3 during return path printing. The length of the empty data DT10 added to the second converted row image data DT42 is, for example, the standard space β × 4. Moreover, the data converter 25 adds the empty data DT10 to the third converted row image data DT43 such that the empty data DT10 is referred to while the third ejection row 102C moves from the third return path reference position P53 to the return path standard position P3. Herein, the empty data DT10 that is added to the third converted row image data DT43 is added before the third converted row image data DT43. A length of the empty data DT10 that is added to the third converted row image data DT43 corresponds to a length along which the third ejection row 102C moves from the third return path reference position P53 to the return path standard position P3 during return path printing. The length of the empty data DT10 that is added to the third converted row image data DT43 is, for example, the standard space β × 2. Note that, in Fig. 5, illustration of the empty data DT10 that is added to each of the first converted row image data DT41 to the third converted row image data DT43 is omitted.

Note that, in this preferred embodiment, as illustrated in Fig. 7A, the fourth return path reference position P54 and the return path standard position P3 are positioned in the same position in the Y direction, as described above. Therefore, the empty data DT10 is not added to the fourth converted row image data DT44. As described above, the converted image data DT3 including the first converted row image data DT41 to the fourth converted row image data DT44 with the empty data DT10 added thereto is created by the data converter 25.

In this preferred embodiment, as in the state S20 of Fig. 7A, the sensor 306 detects the return path standard mark 42 and, as illustrated in state S21, after the ejection head 100 moves from the return path detection position P4 by the first moving distance D1 on the return path Y2, when the first ejection row 102A passes the first return path reference position P51, the return path printing controller 32 starts reference to the first converted row image data DT41. Herein, since the empty data DT10 added to the first converted row image data DT41 is referred to while the first ejection row 102A moves from the first return path reference position P51 to the return path standard position P3, control in which the ink is ejected from the first ejection row 102A is not started until the first ejection row 102A passes the return path standard position P3. Herein, after the first ejection row 102A reaches the first return path reference position P51, when the ejection head 100 further moves on the return path Y2, the second ejection row 102B reaches the second return path reference position P52, as in the state S22 of Fig. 7A. When the second ejection row 102B passes the second return path reference position P52, the return path printing controller 32 starts reference to the second converted row image data DT42. Herein, since the empty data DT10 added to the second converted row image data DT42 is referred to while the second ejection row 102B moves from the second return path reference position P52 to the return path standard position P3, control in which the ink is ejected from the second ejection row 102B is not started until the second ejection row 102B passes the return path standard position P3.

Herein, after the second ejection row 102B reaches the second return path reference position P52, when the ejection head 100 further moves on the return path Y2, the third ejection row 102C reaches the third return path reference position P53, as in the state S23 of Fig. 7A. When the third ejection row 102C passes the third return path reference position P53, the return path printing controller 32 starts reference to the third converted row image data DT43. Herein, since the empty data DT10 added to the third converted row image data DT43 is referred to while the third ejection row 102C moves from the third return path reference position P53 to the return path standard position P3, control in which the ink is ejected from the third ejection row 102C is not started until the third ejection row 102C passes the return path standard position P3.

In this preferred embodiment, after the third ejection row 102C reaches the third return path reference position P53, when the ejection head 100 further moves on the return path Y2, the fourth ejection row 102D reaches the fourth return path reference position P54, as in the state S24 of Fig. 7A. When the fourth ejection row 102D passes the fourth return path reference position P54, the return path printing controller 32 starts reference to the fourth converted row image data DT44. Herein, the fourth return path reference position P54 and the return path standard position P3 are positioned in the same position. Therefore, printing based on the fourth converted row image data DT44 by the fourth ejection row 102D is started at the fourth return path reference position P54. Herein, as in a state S24 of Fig. 7B, after the fourth ejection row 102D passes the return path standard position P3, the return path printing controller 32 performs control in which the ink (herein, the yellow ink) is ejected to the printing material 200 from the fourth ejection row 102D, based on the fourth converted row image data DT44, while causing the ejection head 100 to move on the return path Y2.

Herein, as in the state S24, after the fourth ejection row 102D reaches the return path standard position P3, when the ejection head 100 further moves on the return path Y2 by the standard space β, the third ejection row 102C reaches the return path standard position P3, as in a state S25 of Fig. 7B. After the third ejection row 102C passes the return path standard position P3, the return path printing controller 32 performs control in which the ink (herein, the magenta ink) is ejected to the printing material 200 from the third ejection row 102C, based on the third converted row image data DT43, while causing the ejection head 100 to move on the return path Y2. At this time, the magenta ink ejected from the third ejection row 102C is ejected such that the ink is superimposed on the yellow ink that has been already ejected to the printing material 200.

As in the state S25, after the third ejection row 102C reaches the return path standard position P3, when the ejection head 100 further moves on the return path Y2 by the standard space β, the second ejection row 102B reaches the return path standard position P3, as in a state S26 of Fig. 7B. After the second ejection row 102B passes the return path standard position P3, the return path printing controller 32 performs control in which the ink (herein, the cyan ink) is ejected to the printing material 200 from the second ejection row 102B, based on the second converted row image data DT42, while causing the ejection head 100 to move on the return path Y2. At this time, the cyan ink ejected by the second ejection row 102B is ejected such that the ink is superimposed on the yellow ink and the magenta ink that have been already ejected to the printing material 200.

Herein, as in the state S26, after the second ejection row 102B reaches the return path standard position P3, when the ejection head 100 further moves on the return path Y2 by the standard space β, the first ejection row 102A reaches the return path standard position P3, as in a state S27 of Fig. 7B. After the first ejection row 102A passes the return path standard position P3, the return path printing controller 32 performs control in which the ink (herein, the black ink) is ejected from the first ejection row 102A, based on the first converted row image data DT41, while causing the ejection head 100 to move on the return path Y2. At this time, the black ink ejected to the first ejection row 102A is ejected such that the ink is superimposed on the yellow ink, the magenta ink, and the cyan ink that have already ejected to the printing material 200. In the above-described manner, return path printing can be properly performed based on the converted image data DT3.

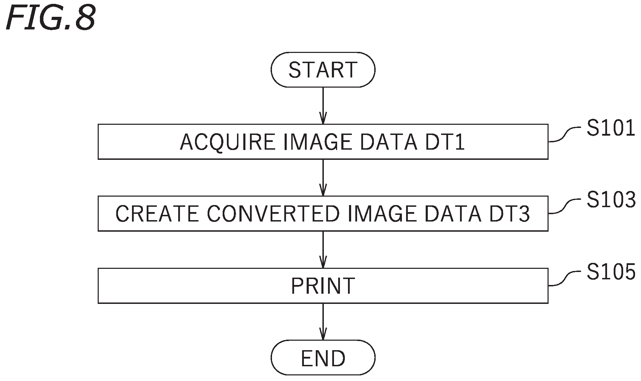

Next, a series of steps of printing by the printer 10 will be briefly described with reference to a flowchart of Fig. 8.

In this preferred embodiment, first, in Step S101 of Fig. 8, the acquirer 23 of Fig. 3 acquires the image data DT1 based on a target image that is to be printed on the printing material 200. There is no particular limitation on an acquisition source from which the acquirer 23 acquires the image data DT1. In this preferred embodiment, the image data DT1 is stored in advance in the storage 21 of the printer 10. Therefore, the acquirer 23 acquires the image data DT1 from the storage 21.

Next, in Step S103 of Fig. 8, the data converter 25 of Fig. 3 creates the converted image data DT3, based on the image data DT1 acquired by the acquirer 23. In this preferred embodiment, forward path printing and return path printing are alternately performed. As the image data DT1, there can be the image data DT1 for forward path printing and the image data DT1 for the return path printing. Therefore, in this preferred embodiment, the data converter 25 creates the converted image data DT3 based on the image data DT1 for return path printing. Herein, the data converter 25 creates the converted row image data DT4 (herein, the first converted row image data DT41 to the fourth converted row image data DT44) obtained by inverting the row image data DT2 (herein, the first row image data DT21 to the fourth row image data DT24) in the image data DT1 for return path printing, as illustrated in Fig. 5. Moreover, as illustrated in Fig. 7A, the data converter 25 properly adds the empty data DT10 to the converted row image data DT4. In the above-described manner, the converted image data DT3 is created from the image data DT1 for return path printing. Note that the converted image data DT3 created by the data converter 25 is stored in the storage 21 of Fig. 3.

Next, printing on the printing material 200 is performed in Step S105 of Fig. 8. Detailed description thereof has been given above, and therefore, description thereof will be omitted as appropriate. Herein, the forward path printing controller 31 of Fig. 3 performs forward path printing, based on the image data DT1. After forward path printing, the controller 20 controls the printing material moving mechanism 52 (see Fig. 3) to cause the printing material moving mechanism 52 to move the printing material 200 supported by the table 18 in the X direction. Thereafter, the return path printing controller 32 of Fig. 3 performs return path printing, based on the converted image data DT3. After return path printing, the controller 20 causes the printing material 200 supported by the table 18 to move in the X direction. Thereafter, forward path printing based on next image data DT1 is performed. As described above, printing on the printing material 200 can be performed by executing forward path printing, moving the printing material 200 in the X direction, return path printing, and moving the printing material 200 in the X direction sequentially and repeatedly.

As has been described above, in this preferred embodiment, as illustrated in Fig. 1, the printer 10 includes the table 18 that supports the printing material 200, the ejection head 100, the head moving mechanism 51 (see Fig. 3), and the controller 20. As illustrated in Fig. 2, the ejection head 100 includes the plurality of ejection rows 102 each of which is the ejection row 102 in which the ejection ports 101 through which the inks are ejected are arranged to align in the X direction and that are arranged to align in the Y direction intersecting the X direction. The head moving mechanism 51 causes the ejection head 100 to move in the Y direction relative to the printing material 200 supported by the table 18. Herein, it is assumed that printing while the ejection head 100 is moving on the forward path Y from one side to the other side in the Y direction is forward path printing. It is also assumed that printing while the ejection head 100 is moving on the return path Y2 from the other side to the one side in the Y direction is return path printing. As illustrated in Fig. 3, the controller 20 includes the acquirer 23, the data converter 25, the forward path printing controller 31, and the return path printing controller 32. The acquirer 23 acquires the image data DT1 (see Fig. 5) for which presence or absence of ejection of the ink heading to the position of the printing material 200 corresponding to the forward path Y1 in the Y direction is instructed and that includes the plurality of pieces of row image data DT2 prepared for each of the ejection rows 102. The data converter 25 creates the converted image data DT3 that is the converted image data DT3 used for return path printing and includes the converted row image data DT4 obtained by inverting the row image data DT2, based on the image data DT1, as illustrated in Fig. 5. In return path printing, the data converter 25 starts reference to the converted row image data DT4 sequentially for the plurality of ejection rows 102 from the first ejection row 102A at the other side (herein, the left side) in the Y direction among the ejection rows 102 and adds the empty data DT10 before the converted row image data DT4 such that the inks ejected from the plurality of ejection rows 102 are superimposed and ejection of the ink is started sequentially from the fourth ejection row 102D at the one side (herein, the right side) in the Y direction. The forward path printing controller 31 executes forward path printing by starting reference to the row image data DT2 sequentially from the first ejection row 102A at the other side (herein, the left side) in the Y direction among the plurality of ejection rows 102, based on the image data DT1 acquired by the acquirer 23, as illustrated in Fig. 6, and starting ejection of the ink. The return path printing controller 32 executes return path printing by starting reference to the converted row image data DT4 sequentially from the first ejection row 102A at the other side in the Y direction among the plurality of ejection rows 102, based on the converted image data DT3 created by the data converter 25, as illustrated in Fig. 7B, and sequentially starting ejection of the inks from the fourth ejection row 102D at the one side (herein, the right side) in the Y direction. Thus, in return path printing, similar to forward path printing, reference to the converted row image data DT4 sequentially from the first ejection row 102A at the other side in the Y direction is started, and timing at which the ink is ejected based on the converted row image data DT4 such that the inks ejected from the plurality of ejection rows 102 are superimposed is controlled. Accordingly, the ink can be ejected to a proper position in both forward path printing and return path printing.

In this preferred embodiment, the forward path printing controller 31 executes forward path printing, by performing control in which the ink is ejected from the ejection row 102, based on the row image data DT2 corresponding to the ejection row 102, when the ejection row 102 of the ejection head 100 that is moving on the forward path Y1 passes the forward path standard position P1 set in advance in the Y direction, as illustrated in Fig. 6. The return path printing controller 32 executes return path printing by performing control in which the ink is ejected from the ejection row 102, based on the converted row image data DT4 corresponding to the ejection row 102, when the ejection row 102 of the ejection head 100 that is moving on the return path Y2 passes the return path standard position P3 set in advance in the Y direction, as illustrated in Fig. 7B. As described above, in forward path printing, by synchronizing timing at which control of ejecting the ink for each of the ejection rows 102 with timing at which each of the ejection rows 102 passes the forward path standard position P1, the ink can be ejected to a proper position such that the inks are superimposed. Similarly, in return path printing, by synchronizing timing at which control of ejecting the ink for each of the ejection rows 102 with timing at which each of the ejection rows 102 passes the return path standard position P3, the ink can be ejected to a proper position such that the inks are superimposed.

In this preferred embodiment, as illustrated in Fig. 1, the printer 10 includes the forward path standard mark 41 provided farther at the one side (herein, the right side) than the forward path standard position P1 in the Y direction, the return path standard mark 42 provided farther at the other side (herein, the left side) than the return path standard position P3 in the Y direction, and the sensor 306. The sensor 306 is provided on the ejection head 100 and detects the forward path standard mark 41 and the reverse reference mark 42. As illustrated in Fig. 3, the control unit 20 includes the detector 27. The detector 27 detects the forward path detection position P2 (see Fig. 6) that is the position of the sensor 306 in the Y direction when the forward path standard mark 41 is detected by the sensor 306 or the return detection position P4 (see Fig. 7A) that is the position of the sensor 306 in the Y direction when the return path standard mark 42 is detected. The forward path printing controller 31 performs control of ejecting the ink from the ejection row 102, based on the row image data DT2 corresponding to the ejection row 102 when the ejection head 100 moves from the forward path detection position P2 on the forward path Y1 and each of the ejection rows 102 passes the forward path standard position P1, as illustrated in Fig. 6. The return path printing controller 32 performs control of ejecting the ink from the ejection row 102, based on the converted row image data DT4 corresponding to the ejection row 102 when the ejection head 100 moves from the return path detection position P4 on the return path Y2 and each of the ejection rows 102 passes the return path standard position P3, as illustrated in Fig. 7B. As described above, by causing the ejection head 100 to move on the forward path Y1 using, as a standard, the forward path detection position P2 where the forward path standard mark 41 has been detected, it can be facilitated to determine that the ejection row 102 has passed the forward path standard position P1. Similarly, by causing the ejection head 100 to move on the return path Y2 using, as a standard, the return path detection position P4 where the return path standard mark 42 has been detected, it can be facilitated to determine that the ejection row 102 has passed the return path standard position P3.

In this preferred embodiment, as illustrated in Fig. 7A, the return path printing controller 32 starts reference to the converted row image data DT4 when the ejection head 100 moves from the return path detection position P4 on the return path Y2 and the ejection row 102 passes the return path reference position P5 set in advance. The data converter 25 adds the empty data DT10 (see Fig. 7A) that is referred to while the ejection row 102 moves from the return path reference position P5 to the return path standard position P3 to the converted row image data DT4. Thus, the ink can be kept from being ejected from the ejection row 102 while the ejection row 102 moves from the return path reference position P5 to the return path standard position P3.

In this preferred embodiment, as illustrated in Fig. 2, the ejection row 102 includes the first ejection row 102A and the second ejection row 102B provided farther at the one side (herein, the right side) than the first ejection row 102A in the Y direction. As illustrated in Fig. 5, the converted row image data DT4 includes the first converted row image data DT41 corresponding to the first ejection row 102A and the second converted row image data DT42 corresponding to the second ejection row 102B. As illustrated in Fig. 6, the forward path printing controller 31 is configured such that, when the ejection head 100 moves from the forward path detection position P2 by the first moving distance D1 set in advance on the forward path Y1, the first ejection row 102 reaches the forward path standard position P1 and, when the ejection head 100 moves from the forward path detection position P2 by the second moving distance D2 that is longer than the first moving distance D1 on the forward path Y1, the second ejection row 102B reaches the forward path standard position P1. As illustrated in Fig. 7A, when the ejection head 100 moves from the return path detection position P4 by the first moving distance D1 on the return path Y2, the first ejection row 102A passes the first return path reference position P51 and the return path printing controller 32 starts reference to the first converted row image data DT41. Moreover, when the ejection head 100 moves from the return path detection position P4 by the second moving distance D2 on the return path Y2, the second ejection row 102B passes the second return path reference position P52 and the return path printing controller 32 starts reference to the second converted row image data DT42. The data converter 25 adds the empty data DT10 that is referred to while the first ejection row 102A moves from the first return path reference position P51 to the return path standard position P3 to the first converted row image data DT41. Moreover, the data converter 25 adds the empty data DT10 that is referred to while the second ejection row 102B moves from the second return path reference position P52 to the return path standard position P3 to the second converted row image data DT42. Thus, in forward path printing, a moving distance along which the first ejection row 102A reaches the forward path standard position P1 and in return path printing, a moving distance along which the first ejection row 102A reaches the first return path reference position P51 can be caused to be the same first moving distance D1. In forward path printing, a moving distance along which the second ejection row 102B reaches the forward path standard position P1 and in return path printing, a moving distance along which the second ejection row 102B reaches the second return path reference position P52 can be caused to be the same second moving distance D2. Accordingly, the control performed until reference to the row image data DT2 or the converted row image data DT4 is started can be made common for forward path printing and return path printing.

In this preferred embodiment, as illustrated in Fig. 2, the ejection rows 102 include the third ejection row 102C arranged farther at the one side (herein, the right side) in the Y direction than the second ejection row 102B. As illustrated in Fig. 5, the pieces of the converted row image data DT4 include the third converted row image data DT43 corresponding to the third ejection row 102C. As illustrated in Fig. 6, the forward path printing controller 31 is configured such that, when the ejection head 100 moves from the forward path detection position P2 by the third moving distance D3 that is longer than the second moving distance D2 on the forward path Y1, the third ejection row 102C reaches the forward path standard position P1. As illustrated in Fig. 7A, when the ejection head 100 moves from the return path detection position P4 by the third moving distance D3 on the return path Y2, the third ejection row 102C passes the third return path reference position P53 and the return path printing controller 32 starts reference to the third converted row image data DT43. The data converter 25 adds the empty data DT10 that is referred to while the third ejection row 102C moves from the third return path reference position P53 to the return path standard position P3 to the third converted row image data DT43. Herein, as illustrated in Fig. 2, the space between the first ejection row 102A and the second ejection row 102B and the space between the second ejection row 102B and the third ejection row 102C are the same, that is, the standard space β. As illustrated in Fig. 6, each of a difference between the first moving distance D1 and the second moving distance D2 and a difference between the second moving distance D2 and the third moving distance D3 is the standard space β. Thus, in forward path printing, by causing the ejection head 100 to move on the forward path Y1 by the standard space β each time, the first ejection row 102A, the second ejection row 102B, and the third ejection row 102C can be caused to sequentially reach the forward path standard position P1. In return path printing, by causing the ejection head 100 to move on the return path Y2 by the standard space β each time, the third ejection row 102C, the second ejection row 102B, and the first ejection row 102A can be caused to sequentially reach the return path standard position P3.

Note that, in this preferred embodiment, the printing method of the printer 10 is realized. Herein, the printing method includes an acquisition step, a data conversion step, a detection step, a forward path printing control step, and a return path printing control step. The acquisition step, the data conversion step, the detection step, the forward path printing control step, and the return path printing control step are embodied by the acquirer 23, the data converter 25, the detector 27, the forward path printing controller 31, and the return path printing controller 32, respectively.

### Reference Signs List

- 10: Printer
- 18: Table
- 20: Controller
- 23: Acquirer
- 25: Data converter
- 27: Detector
- 31: Forward path printing controller
- 32: Return path printing controller
- 41: Forward path standard mark
- 42: Return path standard mark
- 51: Head moving mechanism
- 100: Ejection head
- 101: Ejection ports
- 200: Printing material
- 306: Sensor
- DT1: Image data
- DT2: Row image data
- DT3: Converted image data
- DT4: Converted row image data
- DT10: Empty Data
- P1: Forward path standard position
- P2: Forward path detection position
- P3: Return path standard position
- P4: Return path detection position
- P5: Return path reference position
- Y1: Forward path
- Y2: Return path

## Claims

1. A printer comprising:
a table that supports a printing material;
an ejection head including a plurality of ejection rows each of which is an ejection row in which ejection ports through which inks are ejected are arranged to align in a first direction and that are arranged to align in a second direction that intersects the first direction;
a head moving mechanism that causes the ejection head to move in the second direction relative to the printing material supported by the table, and
a controller,
wherein
when it is assumed that printing while the ejection head is moving on a forward path heading from one side to the other side in the second direction is forward path printing and printing while the ejection head is moving on a return path heading from the other side to the one side in the second direction is return path printing,
the controller includes
an acquirer that acquires image data for which presence or absence of ejection of an ink heading to a position of the printing material corresponding to the forward path in the second direction is instructed and that includes a plurality of pieces of row image data prepared for each of the ejection rows, and
a data converter that creates converted image data that is used for the return path printing and includes converted row image data obtained by inverting the row image data, based on the image data,
in the returning path printing, the data converter sequentially starts reference to the converted row image data from the ejection row at the other side in the second direction among the plurality of ejection rows and adds empty data before the converted row image data such that inks ejected from the plurality of ejection rows are superimposed and ejection of the inks is sequentially started from the ejection row at the one side in the second direction, and
the controller includes
a forward path printing controller that executes the forward printing by sequentially starting reference to the row image data and starting ejection of the ink from the ejection row at the other side in the second direction among the plurality of ejection rows, based on the image data acquired by the acquirer, and
a return path printing controller that executes the return printing by sequentially starting reference to the converted row image data from the ejection row at the other side in the second direction among the plurality of ejection rows, based on the converted image data created by the data converter and sequentially starting ejection of the inks from the ejection row at the one side in the second direction.

2. The printer according to claim 1,
wherein
the forward path printing controller executes the forward path printing by performing control in which, when the ejection row of the ejection head that is moving on the forward path passes a forward path standard position set in advance in the second direction, the ink is ejected from the ejection row, based on the row image data corresponding to the ejection row, and
the return path printing controller executes the return path printing by performing control in which, when the ejection row of the ejection head that is moving on the return path passes a return path standard position set in advance in the second direction, the ink is ejected from the ejection row, based on the converted row image data corresponding to the ejection row.

3. The printer according to claim 2, further comprising:
a forward path standard mark provided farther at the one side in the second direction than the forward path standard position;
a return path standard mark provided farther at the other side in the second direction than the return path standard position; and
a sensor that is provided on the ejection head and detects the forward path standard mark and the return path standard mark,
wherein
the controller includes a detector that detects a forward path detection position that is a position of the sensor in the second direction when the forward path standard mark is detected by the sensor or a return path detection position that is a position of the sensor in the second direction when the return path standard mark is detected by the sensor,
the forward path printing controller performs control in which, when the ejection head moves from the forward path detection position on the forward path and each of the ejection rows passes the forward path standard position, the ink is ejected from the ejection row, based on the row image data corresponding to the ejection row, and
the return path printing controller performs control in which, when the ejection head moves from the return path detection position on the return path and each of the ejection rows passes the return path standard position, the ink is ejected from the ejection row, based on the converted row image data corresponding to the ejection row.

4. The printer according to claim 3,
wherein
the return path printing controller starts reference to the converted row image data when the ejection head moves from the return path detection position on the return path and the ejection row passes the return path reference position set in advance, and
the data converter adds the empty data that is referred to while the ejection row moves from the return path reference position to the return path standard position to the converted row image data.

5. The printer according to claim 4,
wherein
the ejection rows include
a first ejection row, and
a second ejection row arranged farther at the one side in the second direction than the first ejection row,
the pieces of the converted row image data include
first converted row image data corresponding to the first ejection row, and
second converted row image data corresponding to the second ejection row,
the forward path printing controller is configured to cause, when the ejection head moves from the forward path detection position by a first moving distance set in advance on the forward path, the first ejection row to reach the forward path standard position and, cause, when the ejection head moves from the forward detection position by a second moving distance that is longer than the first moving distance on the forward path, the second ejection row to reach the forward path standard position,
when the ejection head moves from the return path detection position by the first moving distance on the return path, the first ejection row passes the first return path reference position and the return path printing controller starts reference to the first converted row image data,
when the ejection head moves from the return path detection position by the second moving distance on the return path, the second ejection row passes the second return path reference position and the return path printing controller starts reference to the second converted row image data, and
the data converter adds the empty data that is referred to while the first ejection row moves from the first return path reference position to the return path standard position to the first converted row image data and adds the empty data that is referred to while the second ejection row moves from the second return path reference position to the return path standard position to the second converted row image data.

6. The printer according to claim 5,
wherein
the ejection rows include a third ejection row arranged farther at the one side in the second direction than the second ejection row,
the pieces of the converted row image data include third converted row image data corresponding to the third ejection row,
the forward path printing controller is configured such that, when the ejection head moves from the forward path detection position by a third moving distance that is longer than the second moving distance on the forward path, the third ejection row reaches the forward path standard position,
when the ejection head moves from the return path detection position by the third moving distance, the third ejection row passes the third return path reference position and the return path printing controller starts reference to the third converted row image data,
the data converter adds the empty data that is referred to while the third ejection row moves from the third return path reference position to the return path standard position to the third converted row image data,
a space between the first ejection row and the second ejection row and a space between the second ejection row and the third ejection row are a same standard space, and
each of a difference between the first moving distance and the second moving distance and a difference between the second moving distance and the third moving distance is the standard space.

7. A printing method of a printer,
the printer including
a table that supports a printing material, and
an ejection head including a plurality of ejection rows each of which is an ejection row in which ejection ports through which inks are ejected are arranged to align in a first direction and that are arranged to align in a second direction that intersects the first direction,
when it is assumed that printing when the ejection head is moving on a forward path heading from one side to the other side in the second direction is forward path printing and printing when the ejection head is moving on a return path heading from the other side to the one side in the second direction is return path printing,
the printing method comprising:
an acquisition step of acquiring image data for which presence or absence of ejection of an ink heading to a position of the printing material corresponding to the forward path in the second direction is instructed and that includes a plurality of pieces of row image data prepared for each of the ejection rows; and
a data conversion step of creating converted image data that is used for return path printing and includes converted row image data obtained by inverting the row image data, based on the image data,
wherein
in the data conversion step, in returning path printing, reference to the converted row image data is sequentially started from the ejection row at the other side in the second direction among the plurality of ejection rows and empty data is added before the converted row image data such that inks ejected from the plurality of ejection rows are superimposed and ejection of the inks is sequentially started from the ejection row at the one side in the second direction,
the printing method further includes
a forward path printing control step of executing the forward printing by sequentially starting reference to the row image data and starting ejection of the ink from the ejection row at the other side in the second direction among the plurality of ejection rows, based on the image data acquired in the acquisition step, and
a return path printing control step of executing the return printing by sequentially starting reference to the converted row image data from the ejection row at the other side in the second direction among the plurality of ejection rows, based on the converted image data created in the data conversion step, and sequentially starting ejection of the inks from the ejection row at the one side in the second direction.
